# EUROPÄISCHE PATENTSCHRIFT

(11) **EP 3 423 211 B1**
(45) Veröffentlichungstag und Bekanntmachung des Hinweises auf die Patenterteilung: **07.04.2021**
(21) Anmeldenummer: 17704747.9
(22) Anmeldetag: 10.02.2017
(51) Int. Cl.: B21J 15/02, B21J 15/36

(54) **STANZNIETMATRIZE**
DIE FOR SELF-PIERCING RIVET
MATRICE POUR RIVET AUTO-POINÇONNEUR

(30) Priorität: 04.03.2016 DE 102016103999
(43) Veröffentlichungstag der Anmeldung: 09.01.2019
(73) Patentinhaber: Böllhoff Verbindungstechnik GmbH, 33649 Bielefeld (DE)
(72) Erfinder: HENKE, Dennis, 33442 Herzebrock-Clarholz (DE); JUNKLEWITZ, Daniel, 33106 Paderborn (DE); MARXKORS, Andreas, 33161 Hövelhof (DE); MENNE, Franz-Ferdinand, 33175 Bad Lippspringe (DE)
(74) Vertreter: HWP Intellectual Property
(86) Internationale Anmeldenummer: PCT/EP2017/053004
(87) Internationale Veröffentlichungsnummer: WO 2017/148684

(56) Entgegenhaltungen:
- WO-A1-03/020457

## Beschreibung

### 1. Gebiet der Erfindung

Die vorliegende Erfindung betrifft eine Stanznietmatrize zum Setzen eines Stanzniets in zumindest ein erstes und ein zweites Bauteil, ein Setzgerät in Kombination mit dieser Stanznietmatrize, die mithilfe dieser Stanznietmatrize hergestellte Verbindung zwischen mindestens zwei Bauteilen sowie ein Verfahren zum Herstellen einer derartigen Verbindung.

### 2. Hintergrund der Erfindung

Im Stand der Technik ist das Verbinden von zumindest einem ersten und einem zweiten Bauteil mithilfe eines Stanzniets bekannt. Zu diesem Zweck wird mithilfe eines Setzgeräts ein Stanzniet in die mindestens zwei Bauteile eingetrieben, wobei sich die mindestens zwei Bauteile an einer gegenüber dem Stempel angeordneten Matrize abstützen. Diese Matrize wirkt sich aufgrund ihrer Formgestaltung auf die Eigenschaften der Fügeverbindung aus.

So geht beispielsweise aus DE 199 05 528 B4 eine Ambossmatrize hervor. Diese Ambossmatrize zeichnet sich durch eine ebene Oberfläche aus, die das Gegenlager zur Abstützung der miteinander zu verbindenden Bauteile dient. Eine derart ausgebildete Matrize sorgt für eine ästhetisch ansprechende Oberfläche, an der dem Stanzniet abgewandten Seite der Fügeverbindung. Dies ist gerade bei sichtbaren Stanznietverbindungen von Vorteil. Nachteilig wirkt sich jedoch aus, dass das durch den Stanzniet verdrängte Material der Bauteile nicht in einen Matrizenhohlraum ausweichen kann. Dies führt dazu, dass der Stanzniet stärker als beim herkömmlichen Stanznieten gestaucht und gespreizt wird. Dies belastet das Material der Bauteile und somit die gesamte Fügeverbindung. Zudem sorgt die ebene Ambossmatrize für eine stärkere Aufspreizung des Stanzniets, was zu höheren Druckspannungen im Material der Bauteile führt. Auch diese zusätzlichen Druckspannungen können die Lebensdauer der hergestellten Verbindung verkürzen.

In DE 10 2009 039 936 A1 wird eine Matrize zum Herstellen einer Stanznietverbindung eingesetzt, die einen eckigen Matrizenhohlraum mit einer zentralen Vertiefung zeigt. Gerade die eckige Ausgestaltung dieser Stanznietmatrize sorgt für einen ungleichförmigen Materialfluss während des Setzvorgangs. Dies führt zu einer unkoordinierten Materialverteilung innerhalb des Matrizenhohlraums. Als Konsequenz ist der Matrizenhohlraum ungleichmäßig mit Material des matrizenseitigen Bauteils gefüllt, so dass der ausgebildete Schließkopf nicht gleichmäßig den aufgespreizten Nietschaft umschließt.

EP 1 078 701 A2 und EP 2 606 993 B1 schlagen zur Herstellung einer verlässlichen Stanznietverbindung eine Stanznietmatrize mit einer kugelabschnittsförmigen Vertiefung vor. Diese Stanznietmatrize ist gerade für duktilere Werkstoffe, wie beispielsweise Aluminium, bis zu einer Blechdicke 1,5 mm geeignet. Auch wenn die gleichmäßig geformte kugelabschnittsförmige Vertiefung einen gleichmäßigen Materialfluss während des Setzvorgangs unterstützt, wurde ein fehlendes Aufspreizen des Stanzniets sowie ein mögliches Stauchen des Stanzniets festgestellt. Diese Vorgänge beeinträchtigen die Lebensdauer der hergestellten Verbindung.

Im Fahrzeugbau werden immer häufiger Magnesium- und Aluminiumbauteile eingesetzt. Diese tragen aufgrund ihres reduzierten Gewichts, beispielsweise im Vergleich zu Stahlwerkstoffen, zu einer Reduktion des Fahrzeuggewichts und somit des Kraftstoffverbrauchs bei. Werden jedoch Verbindungen zwischen aus diesen Materialien bestehenden Bauteilen hergestellt, wie beispielsweise Bauteile aus Aluminium der 7000er-Reihe, sind diese Verbindungen häufig durch negative Rissbildung beeinträchtigt. DE 11 2012 003 904 T5 schlägt daher eine passende Wärmebehandlung für Stanznietverbindungen in derartigen Werkstoffen vor. Zwar kann die hier beschriebene Wärmebehandlung die Rissbildung reduzieren, sie erhöht aber auch den Aufwand zur Herstellung derartiger Verbindungen. Daher ist es ein Ziel vorliegender Erfindung, eine passend gestaltete Stanznietmatrize vorzuschlagen, die selbst bei der Herstellung einer Stanznietverbindung in spröden Werkstoffen, wie beispielsweise Aluminium der 7000er-Serie oder Aluminiumlegierungen, eine zusätzliche thermische Behandlung überflüssig macht.

Ein ebenfalls aufwendiges Verfahren zur Herstellung einer Stanznietverbindung beschreibt DE 44 04 659 A1. Hier besteht das wesentliche Ziel darin, eine flüssigkeitsdichte Stanznietverbindung zwischen zwei Bauteilen herzustellen. Es soll somit vermieden werden, dass der zu setzende Stanzniet negatives Risswachstum in den Bauteilen erzeugt. Aus diesem Grund wird das Herstellen der Stanznietverbindung durch ein Vorformen der beiden miteinander zu verbindenden Bauteile in eine zum Stanzniet komplementäre Form vorbereitet. Dieses Ziel wird mithilfe eines Stempels erzielt, der in eine Stanznietmatrize eingreift, deren Matrizenhohlraum durch eine ringförmige Vertiefung für den Nietschaft und eine zentrale Erhebung für den Hohlraum im Nietschaft ausgebildet ist. Auf diese Weise wird das Aufspreizen des Halbhohlstanzniets während des Setzvorgangs reduziert. Zudem reduziert sich die Belastung des stempelseitigen Bauteils durch den Stanzniet, so dass dieser während des Setzvorgangs die dem Stempel zugewandte Blechlage nicht durchtrennt. Auf diese Weise wird durch die an die Länge des Stanzniets angepasste Tiefe der Matrize der eigentliche Stanznietvorgang eingeschränkt. Denn durch den an den Stanzniet angepassten ausreichend großen Matrizenhohlraum wirkt dem Stanzniet keine ausreichend große Gegenkraft entgegen, die zum Stauchen des Stanzniets und zur Ausbildung eines ausreichenden Hinterschnitts führt.

WO 2014/009129 A1 beschreibt eine Stanznietmatrize, die im Matrizenhohlraum eine ringförmige Materialflussblockade nutzt. Diese ringförmige Materialflussblockade soll verhindern, dass der Werkstoff des matrizenseitigen Bauteils radial auswärts fließt, sobald er gegen den Boden des Matrizenhohlraums gedrückt worden ist. Auf diese Weise soll sichergestellt werden, dass eine ausreichende Materialrestdicke unterhalb des Stanzniets nach Herstellung der Verbindung vorhanden ist. Zudem soll der Materialstau innerhalb der Materialflussblockade dafür sorgen, dass die dem Nietschaft entgegenwirkende Materialkraft für eine ausreichende Aufspreizung des Nietschafts sorgt. Da der Materialfluss während des Fügevorgangs sowohl durch die ringförmige Materialflussblockade wie auch durch die nahezu senkrecht aufragenden Seitenwände der Matrize behindert wird, erfolgt eine nur ungleichmäßige Materialverteilung im Matrizenhohlraum. Diese unterstützt eine ungleichmäßige Realisierung von Verbindungskräften innerhalb der herzustellenden Stanznietverbindung. Auch die Bereitstellung einer zentralen Vertiefung innerhalb des Matrizenhohlraums verbessert nur geringfügig den Materialfluss während der Herstellung der Stanznietverbindung. Denn gerade wenn diese Vertiefung in Kombination mit der ringförmigen Materialflussblockade verwendet wird, entsteht zunächst eine Art Abschirmung des radial äußeren Matrizenhohlraums, bis das Volumen der zentralen Vertiefung und der ringförmigen Materialflussblockade durch verdrängtes Material des der Matrize zugewandten Bauteils gefüllt worden ist. Erst danach fließt Material in den übrigen Matrizenhohlraum. Diese stufenartige Ausbildung des Schließkopfes innerhalb des Matrizenhohlraums erfordert gerade bei spröden Werkstoffen ein ausreichend großes Füllvolumen für den Matrizenhohlraum. Dieses ist häufig nicht gegeben, was zu einer Schwächung der hergestellten Stanznietverbindung führt.

EP 1 294 504 B1 beschreibt eine Stanznietmatrize, in der übermäßiges Material aus dem Matrizenhohlraum abfließen kann. Dies wird beispielsweise dadurch realisiert, dass eine Öffnung zum Matrizenhohlraum ein Abfließen des Bauteilmaterials ermöglicht. Das auf diese Weise abgeführte verdrängte Bauteilmaterial verhindert, dass ein Materialstau im Matrizenhohlraum den gesetzten Stanzniet kollabieren lässt. Gleichzeitig wird durch das abgeführte Material bei fehlender genauer Abstimmung auf den Matrizenhohlraum aber auch verhindert, dass ein ausreichender Gegendruck des verdrängten Materials zur verlässlichen Aufspreizung und somit dauerhaften Verbindung zwischen beiden Bauteilen führt.

Eine Matrizengestaltung für ein Nietsetzgerät ist zudem in der gattungsgemäßen WO 03/020457 A1 beschrieben. Die Matrize weist einen Hohlraum auf, der dazu konfiguriert ist, eine Verformung des Niets und des Werkstücks während des Nietvorgangs aufzunehmen. Der Hohlraum ist durch einen Hauptabschnitt definiert, der konfiguriert ist, um das Werkstück während des Nietvorgangs zu tragen, und einen Entlastungsabschnitt, der benachbart zu dem Hauptabschnitt angeordnet ist. Der Entlastungsabschnitt ist so konfiguriert, dass er einen Bereich bereitstellt, in den sich das Werkstück und der Niet während des Nietvorgangs verformen können. Der Entlastungsabschnitt umfasst mindestens eine Aussparungstasche, die so konfiguriert ist, dass sie einen Bereich aufrechterhält, der während des gesamten Nietvorgangs von dem Werkstück und dem Niet frei bleibt. Der Entlastungsabschnitt erlaubt es dem Werkstück und dem Niet, sich während des Nietvorgangs frei zu verformen.

Es ist daher die Aufgabe vorliegender Erfindung, eine Stanznietmatrize vorzuschlagen, die im Stand der Technik vorhandene Nachteile überwindet und eine verlässliche Stanznietverbindung mit großer Lebensdauer herstellbar macht. Zudem ist es eine weitere Aufgabe vorliegender Erfindung, eine entsprechende Stanznietverbindung, ein Setzgerät mit einer derartigen Stanznietmatrize sowie ein Verfahren zum Herstellen einer derartigen Verbindung vorzuschlagen.

### 3. Zusammenfassung der Erfindung

Die obige Aufgabe wird durch eine Stanznietmatrize gemäß den unabhängigen Patentansprüchen 1 und 10, durch ein Setzgerät gemäß dem unabhängigen Patentanspruch 11, durch eine Verbindung gemäß dem unabhängigen Patentanspruch 12 sowie durch ein Stanznietverfahren gemäß dem unabhängigen Patentanspruch 14 gelöst. Weitere vorteilhafte Ausgestaltungen und Weiterentwicklungen vorliegender Erfindung ergeben sich aus der folgenden Beschreibung, den begleitenden Zeichnungen und den anhängenden Patentansprüchen.

Die erfindungsgemäße Stanznietmatrize für ein Setzgerät, mit der eine Stanznietverbindung in einer Mehrzahl von Bauteilen unter Ausbildung eines Schließkopfes herstellbar ist, weist die folgenden Merkmale auf: einen Grundkörper, vorzugsweise einen zylindrischen Grundkörper, mit einer Oberseite und einer darin ausgebildeten rotationssymmetrisch zu einer Mittelachse der Stanznietmatrize angeordneten Vertiefung, die an der Oberseite einen Durchmesser D_{M} aufweist, die Vertiefung umfasst einen radial außen angeordneten ringförmigen Entformungsabschnitt, einen sich daran anschließenden Ringkanalabschnitt und einen mittig angeordneten Matrizenboden, wobei in einem parallel zur Mittelachse verlaufenden Querschnitt der Stanznietmatrize eine Entformungsschräge des Entformungsabschnitts mit der Oberseite der Stanznietmatrize einen Winkel α im Bereich von 5° ≤ α ≤ 45° einschließt, die Entformungsschräge radial einwärts über eine Stufe in eine kreisbogenförmige Senkung des Ringkanalabschnitts mit einem Radius Rs in einem Bereich von 8,2/1000 D_{M} ≤ R_{S} ≤ 8,2/100 D_{M} übergeht und radial einwärts die kreisbogenförmige Senkung geradlinig oder kreisbogenförmig zum Matrizenboden ansteigt. Die oben beschriebene Form der Stanznietmatrize beeinflusst positiv den Materialfluss des matrizenseitigen Bauteils während des Setzvorgangs, um einen geeigneten Schließkopf für die Fügeverbindung zu bilden. Dabei sorgt gleichzeitig die vorgegebene Form der Stanznietmatrize für ein definiertes Aufspreizen des Stanzniets und eine Reduzierung der mechanischen Spannungen im Nietfuß. Dies wird gerade dadurch erzielt, dass der Ringkanalabschnitt materialaufnehmende Räume zur Entlastung des Nietfußbereichs bereitstellt. Zudem sorgen gleichmäßige Übergänge zwischen dem Ringkanalabschnitt und dem ringförmigen Entformungsabschnitt für einen gleichförmigen Materialfluss, der eine verlässliche Schließkopfausbildung unterstützt.

Gemäß einer ersten bevorzugten Ausführungsform der erfindungsgemäßen Stanznietmatrize ist die Entformungsschräge geradlinig ausgebildet. Gemäß einer weiteren bevorzugten Ausführungsform weist die Entformungsschräge eine konkav-kreisbogenförmige Gestalt mit einem Radius R_{ES} im Bereich von 7/10 D_{M} ≤ R_{ES} ≤ 9/10 D_{M} auf. Aufgrund des bereits oben angesprochenen gleichmäßigen und barrierefreien Übergangs zwischen dem ringförmigen Entformungsabschnitt und dem sich anschließenden Ringkanalabschnitt wird das in der Vertiefung der Stanznietmatrize verformte Material gerade nicht gestaut. Dieses Material des matrizenseitigen Bauteils kann sich in die bereitgestellten Freiräume bewegen, so dass der Stanzniet während des Setzvorgangs gleichmäßig aufgespreizt wird. Gemäß einer weiteren bevorzugten Ausführungsform vorliegender Erfindung weist die kreisbogenförmige Senkung der Stanznietmatrize eine maximale Tiefe T_{RK} bezogen auf die Oberseite der Stanznietmatrize im Bereich von 6/100 D_{M} ≤ T_{RK} ≤ 12/100 D_{M} auf. In Anhängigkeit von dem Material des matrizenseitigen Bauteils ist die Tiefe der Senkung im Ringspaltabschnitt variabel einstellbar. Auf diese Weise kann gezielt auf ein bestimmtes Materialverhalten, wie beispielsweise bei spröden Materialien, eingegangen werden, um Rissbildung im Schließkopf zu vermeiden. Erfindungsgemäß bevorzugt werden als spröde Werkstoffe Materialien bezeichnet, die eine Bruchdehnung von weniger als 15 % aufweisen. Zu derartigen Materialien zählen beispielsweise Magnesium-Druckguss-Legierungen, hochvergütete Stähle mit einer Festigkeit über 900 MPa oder Aluminium-Kupfer-Legierungen der 200er Serie sowie Aluminium-Zink-Legierungen der 7000er Serie, um nur einige Beispiele zu nennen.

Weiterhin bevorzugt geht die Entformungsschräge in einer konvexen Stufe in die Senkung des Ringkanalabschnitts über. Es ist zudem erfindungsgemäß bevorzugt, dass auch die Senkung des Ringkanalabschnitts in einer konvexen Stufe in den Matrizenboden übergeht. Es hat sich gezeigt, dass gerade die Vermeidung kantiger Übergänge den Materialfluss innerhalb der Vertiefung der Stanznietmatrize unterstützt. Daher stellen krummlinig geformte Übergänge die bevorzugte Verbindung zwischen der Entformungsschräge und der Senkung sowie zwischen der Senkung und dem Matrizenboden bereit. Auf diese Weise wird ebenfalls vermieden, dass ein Materialfluss an beispielsweise einer Kante zwischen Entformungsschräge und Senkung den Materialfluss blockiert, was zu einer unvorhersehbaren Stauchung des Stanzniets während des Fügevorgangs führen könnte.

Gemäß einer weiteren bevorzugten Ausführungsform der erfindungsgemäßen Stanznietmatrize geht die kreisbogenförmige Senkung in zwei benachbarten Übergangspunkten tangential in die benachbarten konvexen Stufen über. Durch einen radialen Abstand A_{UP} zwischen den benachbarten Übergangspunkten wird eine Breite der kreisbogenförmigen Senkung des Ringkanalabschnitts definiert. Diese Breite der kreisbogenförmigen Senkung liegt vorzugsweise im Bereich von 3/100 D_{M} ≤ A_{UP} ≤ 20/100 D_{M}. Auch aus obiger Definition geht hervor, dass erfindungsgemäß bevorzugt die Vertiefung der Stanznietmatrize durch einen stetig gleichmäßigen Wandverlauf definiert ist. Dabei ist neben der Tiefe der Senkung des Ringkanalabschnitts ebenfalls die Breite der Senkung des Ringkanalabschnitts an die jeweilige Materialwahl des matrizenseitigen Bauteils anpassbar. Entsprechend wird das durch die Vertiefung der Stanznietmatrize aufnehmbare Volumen unter Berücksichtigung der Materialeigenschaften zumindest des matrizenseitigen Bauteils gezielt gestaltet.

Gemäß einer weiteren bevorzugten Ausführungsform vorliegender Erfindung umfasst der Matrizenboden eine mittige Aussparung mit einer Tiefe T_{A} im Bereich von 2/100 D_{M} ≤ T_{A} ≤ 8/100 D_{M} und mit einem bevorzugten Durchmesser D_{A} im Bereich von 15/100 D_{M} ≤ D_{A} ≤ 35/100 D_{M}. Diese bevorzugte Ausgestaltung des Matrizenbodens stellt eine weitere Möglichkeit dar, um gezielt das in der Vertiefung der Stanznietmatrize aufzunehmende Materialvolumen des matrizenseitigen Materials anzupassen. Des Weiteren wird mithilfe der Formgestaltung der mittigen Aussparung im Matrizenboden auch das Fließverhalten des Materials und somit die Ausbildung des Schließkopfes beeinflusst.

Gemäß unterschiedlicher bevorzugter Ausführungsformen vorliegender Erfindung ist die Innenkontur bzw. die innere Form der mittigen Aussparung unterschiedlich ausgebildet. Gemäß einer ersten Alternative ist die mittige Aussparung zylindrisch ausgebildet. Eine weitere bevorzugte Ausführungsform empfiehlt, die mittige Aussparung mit einer zentralen Erhebung oder einer konisch zulaufenden zusätzlichen Absenkung auszustatten. Es ist des Weiteren bevorzugt, den Boden der mittigen Aussparung mit einem zusätzlichen Ringspalt auszugestalten, der eine kreisbogenförmige Erhebung oder eine halbelliptische Erhebung einschließt. Gemäß einer weiteren bevorzugten Ausgestaltung der mittigen Aussparung läuft diese in Tiefenrichtung konisch zu.

Vorliegende Erfindung umfasst zudem eine Stanznietmatrize für ein Setzgerät, mit der eine Stanznietverbindung in einer Mehrzahl von Bauteilen unter Ausbildung eines Schließkopfes herstellbar ist. Diese Stanznietmatrize weist die folgenden Merkmale auf: einen Grundkörper, vorzugsweise einen zylindrischen Grundkörper, mit einer Oberseite und einer darin ausgebildeten rotationssymmetrisch zu einer Mittelachse der Stanznietmatrize angeordneten Vertiefung, die an der Oberseite einen Durchmesser D_{M} aufweist, die Vertiefung umfasst einen radial außen angeordneten ringförmigen Entformungsabschnitt, einen sich daran anschließenden Ringkanalabschnitt und einen mittig angeordneten Matrizenboden, wobei in einem parallel zur Mittelachse verlaufenden Querschnitt der Stanznietmatrize eine Entformungsschräge des Entformungsabschnitts mit der Oberseite der Stanznietmatrize einen Winkel α im Bereich von 10° ≤ α ≤ 85° einschließt, die Entformungsschräge radial einwärts in eine kreisbogenförmige Senkung des Ringkanalabschnitts mit einem Radius R_{S} in einem Bereich von 8,2/1000 D_{M} ≤ R_{S} ≤ 8,2/100 D_{M} übergeht und radial einwärts die kreisbogenförmige Senkung über zumindest eine erste Stufe kreisbogenförmig zum Matrizenboden ansteigt. Der Matrizenboden weist eine mittig angeordnete rotationssymmetrische Erhebung auf, die krummlinig, kreisbogenförmig, halbelliptisch oder zylindrisch ausgebildet ist. Zwischen der ersten Stufe und der rotationssymmetrischen Erhebung ist eine ebene Fläche bereitgestellt.

Es hat sich gezeigt, dass gerade mit dieser bevorzugten Ausgestaltung vorliegender Erfindung das Aufspreizverhalten eines Halbhohlstanzniets zur Erzeugung eines gesteigerten Hinterschnitts beeinflusst werden kann. Dabei wird der Nietfuß radial auswärts mithilfe der Kombination aus Ringspaltabschnitt und Matrizenboden in vorteilhafter Weise radial auswärts verformt.

Diese mittig angeordnete rotationssymmetrische Erhebung sorgt erfindungsgemäß bevorzugt für den erforderlichen Materialstau, mit dessen Hilfe der Nietfuß radial auswärts zur Ausbildung eines passenden Hinterschnitts verformt wird.

Vorliegende Erfindung umfasst zudem ein Setzgerät mit einer Stanznietmatrize gemäß einer der oben beschriebenen bevorzugten Ausführungsformen vorliegender Erfindung. Des Weiteren umfasst vorliegende Erfindung eine Verbindung aus zumindest einem ersten Bauteil und einem zweiten Bauteil, die mithilfe eines Stanzniets und der oben beschriebenen Stanznietmatrize hergestellt worden ist, so dass ein die Verbindung charakterisierender Schließkopf komplementäre Formmerkmale in Bezug auf die Stanznietmatrize aufweist. Gemäß einer weiteren bevorzugten Ausgestaltungsform vorliegender Erfindung besteht das zum Schließkopf benachbarte zweite Bauteil aus einem empfindlichen oder spröden Material, vorzugsweise aus einer 7000er-Aluminiumlegierung.

Vorliegende Erfindung offenbart zudem ein Stanznietverfahren zur Herstellung einer Verbindung in zumindest einem ersten und einem zweiten Bauteil mithilfe eines Stanzniets, einem Setzgerät und einer Stanznietmatrize gemäß einer der oben beschriebenen Ausführungsformen. Das Stanznietverfahren weist die folgenden Schritte auf. Bereitstellen der Stanznietmatrize unterhalb eines Stempels des Setzgeräts, Anordnen des ersten und des zweiten Bauteils zwischen der Stanznietmatrize und dem Stempel und Setzen eines Stanzniets in das erste und das zweite Bauteil bei gleichzeitiger Ausbildung eines Schließkopfes, der komplementär zu einer Innenkontur der Stanznietmatrize ausgebildete Formmerkmale aufweist.

### 4. Kurze Beschreibung der begleitenden Zeichnungen

Die bevorzugten Ausführungsformen vorliegender Erfindung werden unter Bezugnahme auf die begleitende Zeichnung näher erläutert. Es zeigen:
- Fig. 1: eine seitliche Darstellung einer bevorzugten Stanznietmatrize vorliegender Erfindung,
- Fig. 2: eine Ansicht der bevorzugten Stanznietmatrize aus Fig. 1 von oben in Fügerichtung in die Vertiefung der Stanznietmatrize,
- Fig. 3: eine schematische seitliche Schnittansicht der Vertiefung der erfindungsgemäß bevorzugten Stanznietmatrize parallel zur Mittelachse der Stanznietmatrize, wobei die Vertiefung einen Ringkanalabschnitt und einen ebenen Matrizenboden aufweist,
- Fig. 4: eine weitere schematische Darstellung der bevorzugten Stanznietmatrize gemäß Fig. 3, in der verschiedene Tiefen des Ringkanalabschnitts angedeutet sind,
- Fig. 5: eine weitere bevorzugte Ausführungsform der erfindungsgemäßen Stanznietmatrize in einer seitlichen Querschnittsansicht,
- Fig. 6: eine Draufsicht auf eine weitere bevorzugte Ausführungsform der erfindungsgemäßen Stanznietmatrize,
- Fig. 7: eine seitliche Querschnittsansicht der bevorzugten Vertiefung der Stanznietmatrize gemäß Fig. 6,
- Fig. 8: eine schematische Darstellung einer weiteren bevorzugten Ausführungsform der Vertiefung der erfindungsgemäßen Stanznietmatrize mit einer zusätzlichen Aussparung im Matrizenboden,
- Fig. 9: die schematische Darstellung der weiteren bevorzugten Stanznietmatrize gemäß Fig. 8, in der unterschiedliche bevorzugte Tiefen des Ringkanalabschnitts und der zentralen Aussparung im Matrizenboden angedeutet sind,
- Fig. 10: eine weitere schematische Darstellung der bevorzugten Stanznietmatrize gemäß Fig. 8, in der unterschiedliche bevorzugte Ausgestaltungen der zentralen Aussparung im Matrizenboden schematisch veranschaulicht sind,
- Fig. 11: eine Draufsicht auf eine weitere bevorzugte Ausführungsform der Vertiefung der erfindungsgemäßen Stanznietmatrize,
- Fig. 12: eine seitliche Schnittansicht der Vertiefung der bevorzugten Stanznietmatrize gemäß Fig. 11,
- Fig. 13: eine Draufsicht auf eine weitere bevorzugte Ausführungsform der Vertiefung der erfindungsgemäßen Stanznietmatrize,
- Fig. 14: eine seitliche Schnittdarstellung der Vertiefung der bevorzugten Stanznietmatrize gemäß Fig. 13,
- Fig. 15: eine schematische Darstellung einer weiteren bevorzugten Stanznietmatrize,
- Fig. 16: ein Setzgerät gemäß DE 10 2009 049 616 mit der bevorzugten Stanznietmatrize,
- Fig. 17 a-d: Schliffbilder und Schließköpfe von erfindungsgemäß bevorzugt hergestellten Verbindungen
- Fig. 18: ein Schliffbild einer bevorzugten Verbindung hergestellt mit der Stanznietmatrize gemäß Fig. 8 und

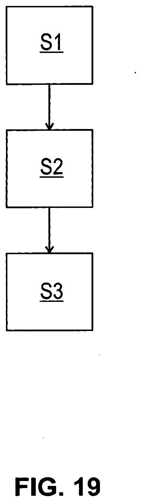

- Fig. 19: ein Flussdiagramm einer bevorzugten Ausführungsform des erfindungsgemäßen Herstellungsverfahrens einer Verbindung mithilfe der Stanznietmatrize.

### 5. Detaillierte Beschreibung der bevorzugten Ausführungsformen

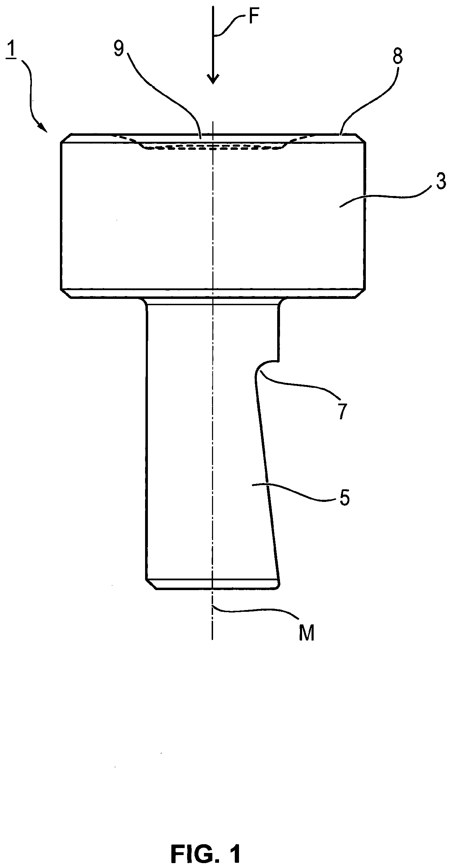

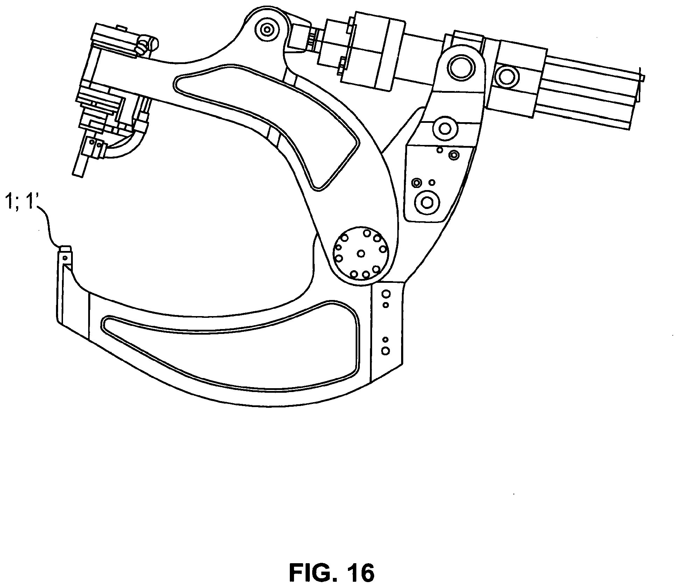

Figur 1 zeigt in einer Seitenansicht eine erfindungsgemäß bevorzugte Stanznietmatrize 1. Diese besteht vorzugsweise aus einem zylindrisch geformten Grundkörper 3 und einem Matrizenfuß 5. In diesem Zusammenhang ist es ebenfalls bevorzugt, den Grundkörper quaderförmig, polyederförmig, elliptisch oder mit einer anderen Form auszugestalten. Der Matrizenfuß 5 dient in bekannter Weise der Anordnung und der Befestigung der Stanznietmatrize 1 in einem bekannten Setzgerät, wie es beispielgebend in Fig. 16 gezeigt ist. Es versteht sich, dass die vorliegende Stanznietmatrize mit bekannten Setzgeräten jeglicher Bauart kombinierbar ist. Dazu weist der Matrizenfuß 5 vorzugsweise einen runden Querschnitt auf. Dieser ist einseitig durch eine Einkerbung 7 in seiner symmetrischen Kontur gestört, um die Stanznietmatrize 1 verdrehsicher in einem passenden Halter anordnen zu können.

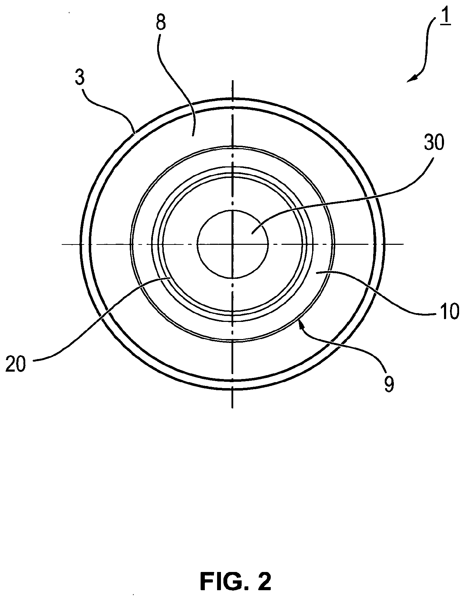

In Figur 2 ist die bevorzugte Stanznietmatrize 1 der Figur 1 in einer Draufsicht dargestellt. Diese Draufsicht entspricht einer Ansicht der Stanznietmatrize 1 in Fügerichtung F, die parallel zur Mittelachse M der Stanznietmatrize 1 verläuft. Der Grundkörper 3 umfasst eine bevorzugt rotationssymmetrisch um die Mittelachse M angeordnete Vertiefung 9, die in der Oberseite 8 des Grundkörpers 3 angeordnet ist. An der Oberseite 8 weist die Vertiefung 9 einen Durchmesser D_{M} auf.

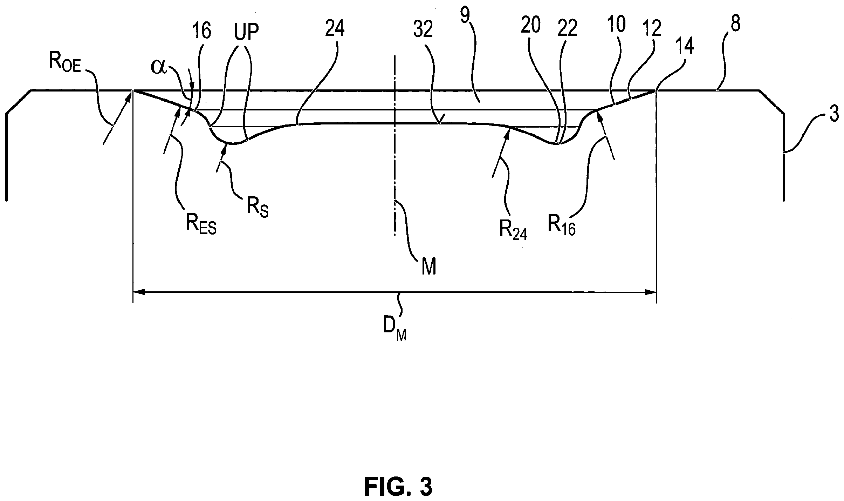

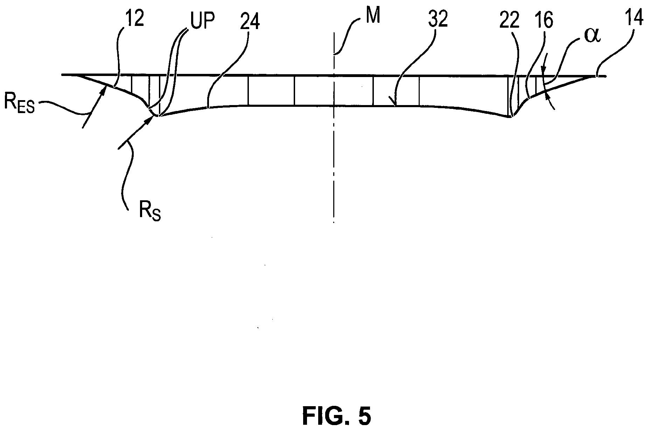

Die Vertiefung 9 ist rotationssymmetrisch in unterschiedliche Abschnitte unterteilt. An der Oberseite 8, also der einem Stempel des Setzgeräts zugewandten Seite der Stanznietmatrize 1, beginnt die Vertiefung 9 mit einem radial außen angeordneten ringförmigen Entformungsabschnitt 10. Der Entformungsabschnitt 10 ist im axialen Querschnitt der Stanznietmatrize 1 gemäß Figur 5 anhand der radial außen angeordneten Entformungsschräge 12 erkennbar. Vorzugsweise geht die Oberseite 8 in einem konvex geformten Abschnitt in die Entformungsschräge 12 über. Gemäß einer bevorzugten Ausführungsform ist der Radius R_{OE} (siehe Fig. 3) für den Übergang von der Oberseite 8 in die Entformungsschräge 12 gleich 4/100 D_{M}. Radial einwärts schließt sich an den Entformungsabschnitt 10 ein Ringkanal 20 an. Dieser ist im Querschnitt der Stanznietmatrize 1 in Figur 5 als eine kreisbogenförmige Senkung 22 erkennbar. Die Senkung 22 geht bevorzugt radial einwärts mit einem gerade und/oder kreisbogenförmig und/oder krummlinig verlaufenden Bereich in einen Matrizenboden 30 über. Dieser Matrizenboden 30 ist ebenfalls rotationssymmetrisch um die Mittelachse M angeordnet und in Figur 5 als ebene Fläche 32 erkennbar.

In einem erfindungsgemäß bevorzugten Fügeverfahren wird ein bekanntes Setzgerät (siehe Fig. 16) in Kombination mit der beschriebenen Stanznietmatrize 1; 1' (siehe unten) zur Herstellung einer Stanznietverbindung genutzt und entsprechend bereitgestellt (Schritt 1). Um eine Mehrzahl von Bauteilen, insbesondere zumindest ein erstes und ein zweites Bauteil, durch Setzen eines Stanzniets miteinander zu verbinden, werden die zumindest zwei Bauteile zwischen Stempel und Stanznietmatrize 1; 1' positioniert (Schritt 2). Dabei wird die erfindungsgemäße Stanznietmatrize 1 vorzugsweise in Kombination mit einem matrizenseitigen Bauteil aus sprödem oder zugempfindlichem Material, wie beispielsweise Aluminiumlegierungen der 7000er-Reihe, Aludruckgussmaterialien oder Magnesium, eingesetzt. Des Weiteren ist für das matrizenseitige Bauteil auch ein Material mit einem Elastizitätsmodul R_{M} < 300 MPa, wie beispielsweise Aluminium, oder mit einem Elastizitätsmodul R_{M} < 1500 MPa, wie beispielsweise hochvergüteter Stahl, vorteilhaft einsetzbar. Als stempelseitiges Bauteil, also eine Decklage der Verbindung, eignet sich grundsätzlich jedes Material, vorzugsweise Kunststoffe, verstärkte Kunststoffe, Aluminium, Magnesium, Legierungen dieser Metalle - also allgemein Lichtbaumaterialien - sowie Stahl und weitere bekannte Metalllegierungen.

Nachdem die Bauteile passend zwischen Stempel und Stanznietmatrize 1 angeordnet worden sind, setzt der Stempel den Stanzniet in die Bauteile, wodurch in der Stanznietmatrize 1 ein diese Verbindung charakterisierender Schließkopf ausgebildet wird (Schritt 3). Der Schließkopf stellt bevorzugt einen Abdruck der inneren Gestaltung der Vertiefung 9 der Stanznietmatrize 1 dar. Entsprechend wird der Schließkopf durch die komplementär zur Innenkontur der Vertiefung 9 ausgebildeten Formmerkmale charakterisiert.

Während des Setzens des Stanzniets in die Bauteile und der Ausbildung des Schließkopfes bewirkt bevorzugt die Entformungsschräge 12 des ringförmigen Entformungsabschnitts 10 eine Reduktion von Rissbildung im Schließkopf. Zur Unterstützung dieses Effekts geht vorzugsweise die Oberseite 8 der Stanznietmatrize 1 in einer konvex ausgebildeten Stufe 14 in die Entformungsschräge 12 über. In gleicher Weise ist es bevorzugt, die Entformungsschräge 12 über eine konvex ausgebildete Stufe 16 mit der Senkung 22 bzw. dem Ringkanalabschnitt 20 zu verbinden. Vorzugsweise weist diese konvex geformte Verbindung zwischen Entformungsschräge 12 und der Senkung 22 einen Radius R₁₆ von ungefähr 5/100 D_{M} auf. Weiterhin bevorzugt ist die Entformungsschräge 12 im Vergleich zu der in Figur 5 gezeigten konkaven Ausgestaltung gerade ausgebildet. Entsprechend weist die Entformungsschräge 12 und somit der ringförmige Entformungsabschnitt 10 eine kegelstumpfartige Kontur auf. Bei einer bevorzugten konkav/kreisbogenförmigen Ausgestaltung der Entformungsschräge 12 weist in diese einen Radius R_{ES} aus dem Bereich 7/10 D_{M} ≤ R_{ES} ≤ 9/10 D_{M} auf.

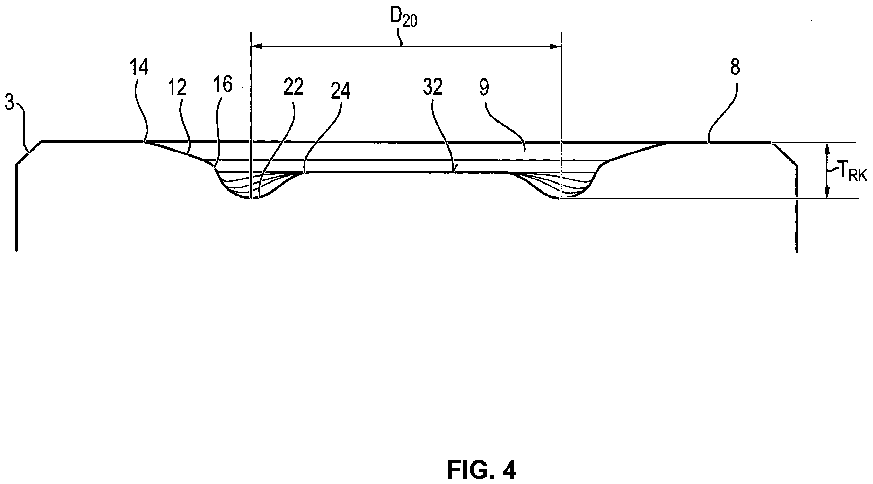

Figur 3 zeigt eine schematische und vereinfachte Querschnittsansicht der Stanznietmatrize 1 mit Entformungsabschnitt 10, Ringkanalabschnitt 20 und Matrizenboden 30. In Figur 4 ist aufbauend auf die Darstellung in Figur 3 hervorgehoben, dass bevorzugt zur Herstellung einer optimalen Stanznietverbindung eine Tiefe T_{RK} des Ringkanalabschnitts 20 in Bezug auf die Oberseite 8 gezielt eingestellt wird. Die unterschiedlichen gestrichelt dargestellten Linien in der Senkung 22 veranschaulichen die Variation der Tiefe T_{RK} in einem bevorzugten Bereich von 6/100 D_{M} ≤ T_{RK} ≤ 12/100 D_{M}, wobei D_{M} den Durchmesser der Vertiefung 9 an der Oberseite 8 des Grundkörpers 3 bezeichnet.

Durch die bevorzugte gezielte Einstellung der Tiefe T_{RK} des Ringkanals 20 bzw. der Senkung 22 gerade in der bevorzugten Kombination mit der Entformungsschräge 12 werden die den Nietfuß während des Fügevorgangs belastenden mechanischen Spannungen reduziert. Als weiterer Vorteil wurde erkannt, dass der Ringkanalabschnitt 20 den Fluss des Materials des matrizenseitigen Bauteils radial auswärts leitet. Genau dieser Materialfluss realisiert bzw. unterstützt ein definiertes und kontrolliertes Aufspreizen des Stanzniets in der Stanznietmatrize 1. Somit wird durch die erfindungsgemäß bevorzugte Kombination und Formgebung der flachen Entformungsschräge 12 und der Senkung 22 des Ringkanalabschnitts 20 mit der Tiefe T_{RK} das Aufspreizen des Stanzniets und der Materialfluss zur Ausbildung des Schließkopfes optimiert.

Denn aufgrund des durch den bevorzugten Ringkanal 20 zusätzlich geschaffenen Freiraums innerhalb der Vertiefung 9 der Stanznietmatrize 1 spürt der Stanzniet zu Beginn des Materialfließens in der Vertiefung 9 zwar eine Gegenkraft durch den Matrizenboden 30. Diese kann aber sofort durch Nutzung des radial außen angeordneten Freiraums des Ringkanals 20 abgebaut werden, so dass durch die bevorzugte Matrizengestaltung die radial auswärts gerichtete Materialfließbewegung gezielt eingeleitet wird. Dies wird bevorzugt auch dadurch unterstützt, dass der Matrizenboden oberhalb des tiefsten Punkts der Senkung 22 liegt.

Vorzugsweise besitzt dazu die Senke 22 des Ringkanalabschnitts 20 einen Radius Rs im Bereich von 8,2/1000 D_{M} ≤ R_{S} ≤ 8,2/100 D_{M}. Dabei bezeichnet D_{M} den Durchmesser der Vertiefung 9 (siehe oben).

Die Entformungsschräge 12 schließt vorzugsweise mit der Oberseite 8 des Grundkörpers 3 den Winkel α ein, wie es in den Figuren 3 und 5 gezeigt ist. Dieser hat entsprechend der radial einwärts gerichteten Neigung der Entformungsschräge 12 eine Größe im Bereich von 5° ≤ α ≤ 45°, vorzugsweise 25° ≤ α ≤ 45° oder 5° ≤ α ≤ 25°. Zudem hat sich als erfindungsgemäß bevorzugt der Winkel α = 18° gezeigt. Gerade durch diese flache Anordnung der Entformungsschräge 12, die ein deutlich anderes Materialfließen in der Vertiefung 9 als eine senkrechte oder annähernd senkrecht angeordnete Seitenwand der Vertiefung 9 hervorruft, wird eine verbesserte Schließkopfausbildung und eine reduzierte Rissbildung im Vergleich zum Stand der Technik erzielt. In diesem Zusammenhang ist es ebenfalls bevorzugt, einen konvexen Übergang zwischen Oberseite der Matrize und Entformungsschräge mit einem Radius von R=0,5 mm zu realisieren.

Um einen ungehemmten Materialfluss in der Vertiefung 9 während des Fügevorgangs zu gewährleisten, ist vorzugsweise auch der Übergang von der Senkung 22 zum Matrizenboden 32 als konvexe Stufe 24 ausgebildet. Auf diese Weise wird vermieden, dass fließendes Material des matrizenseitigen Bauteils innerhalb der Vertiefung 9 aufgestaut wird. Dies gilt in gleicher Weise für die oben beschriebenen bevorzugten Stufen 14 und 16. Zudem bildet diese konvexe Stufe 24 einen fließenden und dadurch barrierefreien Übergang vom Matrizenboden 32 in den Ringkanal 20 bzw. die Senkung 22. Diese konvexe Stufe 24 unterstützt bevorzugt ein kontrolliertes Abgleiten und somit Aufspreizen des Nietfußes des Stanzniets während des Fügevorgangs. Zu diesem Zweck ist ein Radius R₂₄ der konvexen Stufe 24 im Bereich von 98/1000 D_{M} ≤ R₂₄ ≤ 98/100 D_{M} einstellbar.

Weiterhin bevorzugt weist der Ringkanalabschnitt 10 einen Durchmesser D20 auf, wie es in Fig. 4 gezeigt ist. Über eine geeignete Wahl des Durchmessers D20 wird das Aufspreizen des Nietfußes gezielt gesteuert. So wird der Durchmesser D20 entsprechend dem Kopfdurchmesser des zu setzenden Stanzniets eingestellt, sodass ein Aufspreizen des Nietfußes in radialer Richtung über die Außenseite des Nietkopfes hinaus verhindert ist oder zumindest weitestgehend eingeschränkt wird. Entsprechend ist D20=7,75 mm groß beim einem Stanzniet mit einem Kopfdurchmesser von 7,75 mm oder D20=5,5 mm groß bei einem Stanzniet mit einem Kopfdurchmesser von 5,5 mm.

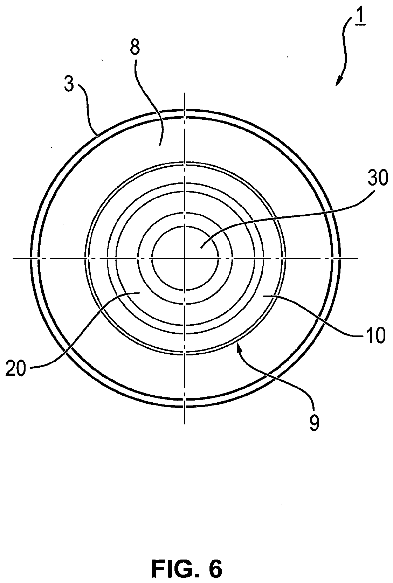

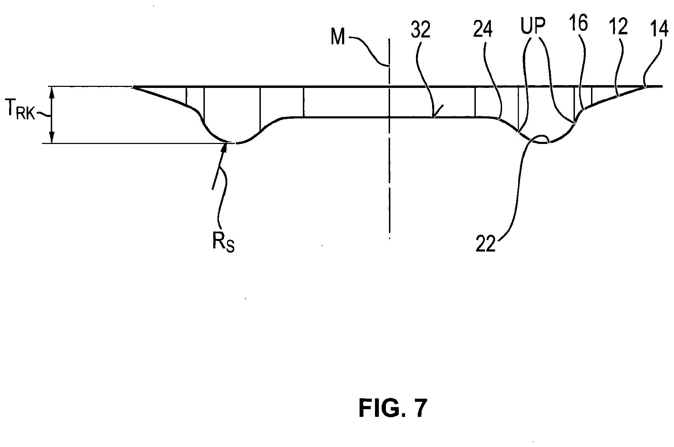

Weiterhin bevorzugt geht die kreisbogenförmige Senkung 22 tangential in die sich beidseitig anschließenden vorzugsweise konvex ausgebildeten Stufen 16 und 24 über. Diese Übergangspunkte sind in Figur 5 mit dem Bezugszeichen UP bezeichnet. Der radiale Abstand A_{UP} zwischen benachbarten Übergangspunkten UP definiert die radiale Breite der Senkung 22. Sie liegt vorzugsweise im Bereich 3/100 D_{M} ≤ A_{UP} ≤ 20/100 D_{M}. Eine weitere bevorzugte Ausgestaltung der Stanznietmatrize 1 ist in den Figuren 6 und 7 dargestellt. Hier wurde im Vergleich zu Figur 5 die Senkung 22 mit einem größeren Radius R_{ES} und mit einer größeren Tiefe T_{RK} ausgebildet.

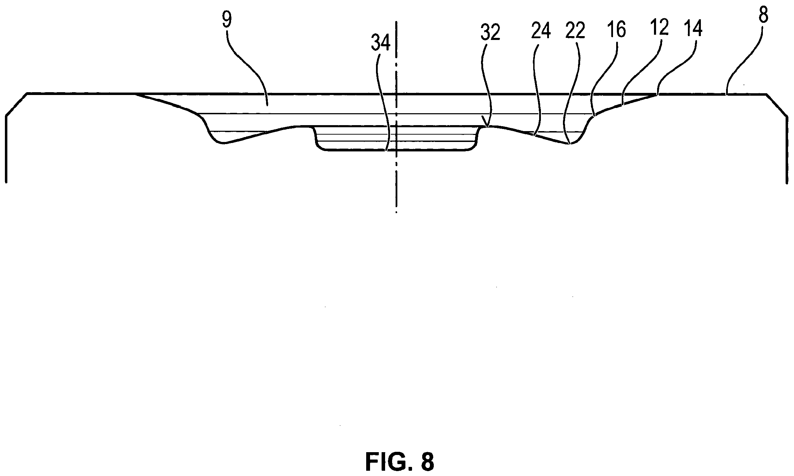

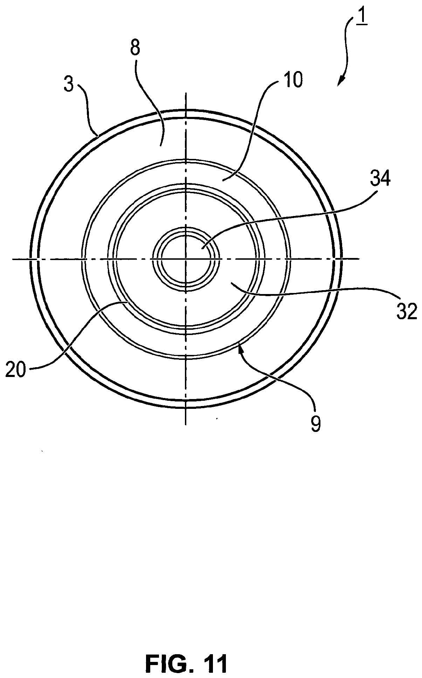

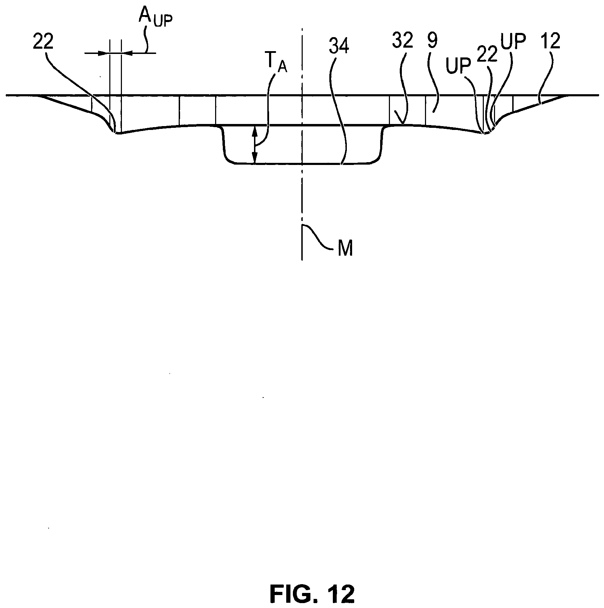

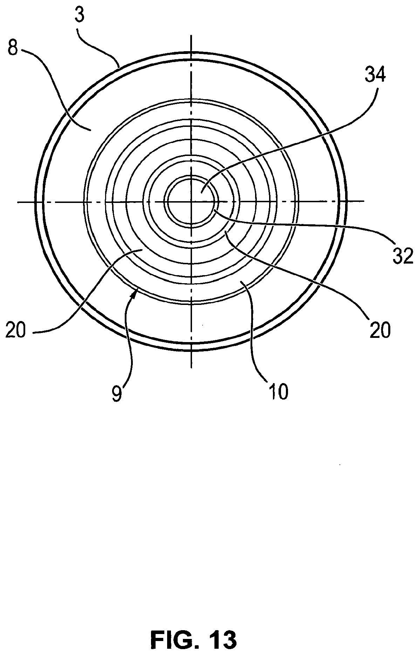

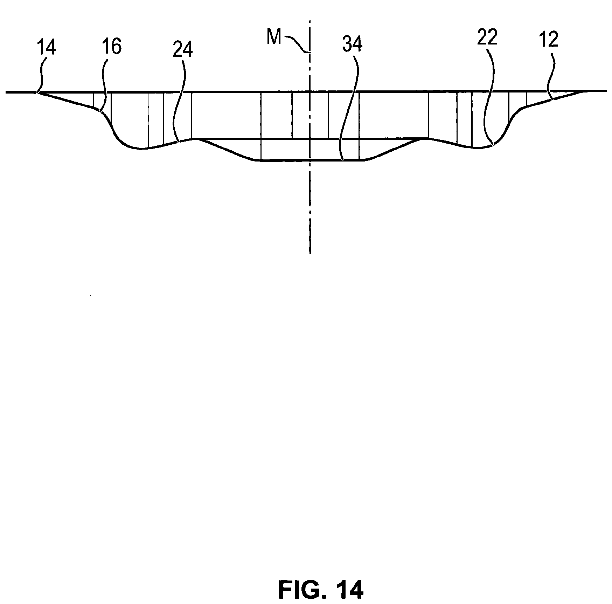

Figur 8 zeigt schematisch eine weitere bevorzugte Ausführungsform vorliegender Erfindung, die detaillierter in den Figuren 11 bis 14 anhand weiterer bevorzugter Ausführungsformen beschrieben ist. Wie man in Figur 8 erkennen kann, steigt die Senkung 22 radial einwärts bis auf die Höhe des Matrizenbodens 32 an. Ergänzend zu den oben beschriebenen Merkmalen der Stanznietmatrize 1, die in gleicher Weise auch für die Ausführungsformen der Figuren 8 bis 14 gelten, ist eine mittige Aussparung 34 im Matrizenboden 32 vorgesehen. Diese ist symmetrisch um die Mittelachse M angeordnet. Diese Aussparung 34 nimmt verdrängtes Material des matrizenseitigen Bauteils auf, wodurch eine Stauchung des Stanzniets vermieden und dieser zusätzlich entlastet wird.

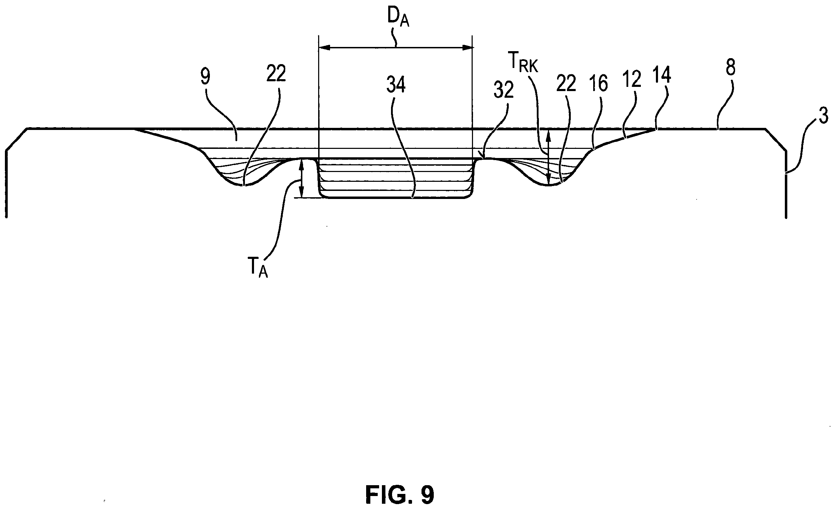

Dazu ist eine Tiefe T_{A} der Aussparung 34 gezielt an die Fügeaufgabe anpassbar, was in Analogie zu den Erläuterungen und Darstellungen in Figur 4 anhand von Figur 9 veranschaulicht ist. Vorzugsweise wird die Aussparung 34 mit einer Tiefe T_{A} im Bereich von 2/100 D_{M} ≤ T_{A} ≤ 8/100 D_{M} und einem bevorzugten Durchmesser D_{A} im Bereich von 15/100 D_{M} ≤ D_{A} ≤ 35/100 D_{M} bereitgestellt. Der Durchmesser D_{A} wird dabei bevorzugt auf Höhe des Matrizenbodens 32 bestimmt.

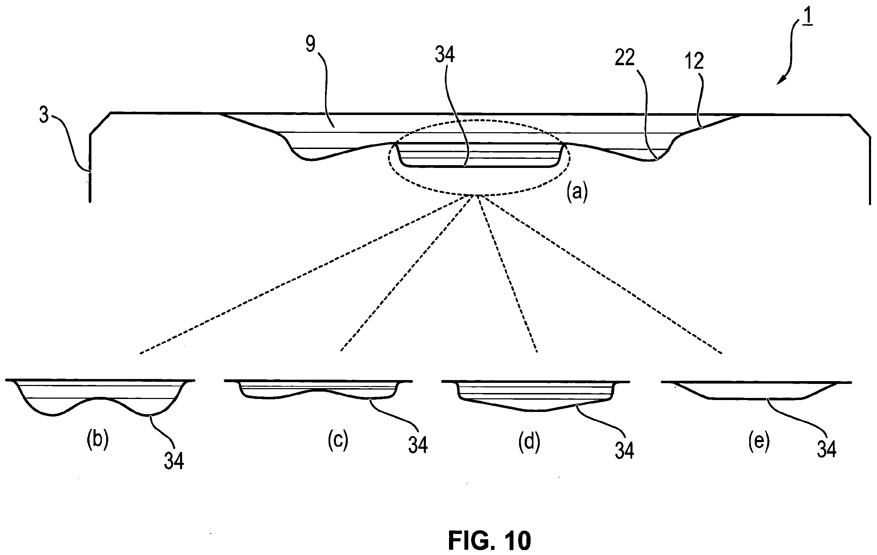

Gemäß Figur 10 ist es weiterhin bevorzugt, die Aussparung 34 in unterschiedlicher Gestalt zur Beeinflussung des Materialflusses innerhalb der Vertiefung 9 einzusetzen. Demnach ist vorzugsweise die Aussparung 34 zylindrisch geformt (a). In einer weiteren bevorzugten Ausführungsform läuft die zylindrisch geformte Aussparung 34 in der Tiefe konisch zu (d) oder ist kegelstumpfartig ausgebildet (e). Gemäß einer weiteren bevorzugten Ausführungsform ist ein Boden der Aussparung 34 mit einem umlaufenden Ringkanal und einer zentralen Erhebung (b) oder nur mit einer zentralen Erhebung ausgestaltet (c). Zunächst unabhängig von der Formgebung der Aussparung 34 ermöglicht diese eine einfachere Materialverdrängung im und/oder aus dem Fügebereich in Form einer Materialaufnahme im Vergleich zu einer Materialverdrängung radial auswärts bezogen auf die Fügerichtung des Stanzniets. Um diese Funktion effektiv nutzen zu können, wird die Tiefe T_{A} der Aussparung an eine Dicke der matrizenseitigen Materiallage angepasst. Dazu gilt der Zusammenhang, mit zunehmender Dicke der matrizenseitigen Materiallage wird auch eine angepasst größere Tiefe T_{A} der Aussparung verwendet. In Bezug auf den oben diskutierten Ringkanal gilt der allgemeine Zusammenhang, mit abnehmender Duktilität

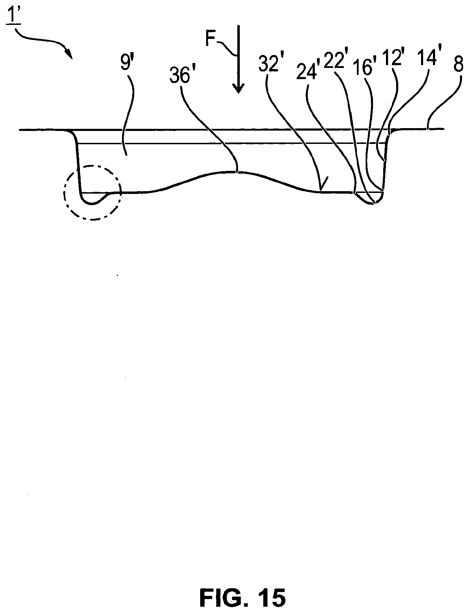

Figur 15 zeigt eine weitere bevorzugte Ausführungsform vorliegender Erfindung. Diese Stanznietmatrize 1' zeichnet sich bezogen auf den in Figur 15 gezeigten schematischen Querschnitt durch folgende Merkmale aus. Die Entformungsschräge 12' des Entformungsabschnitts 10' schließt mit der Oberseite 8' der Stanznietmatrize 1' einen Winkel α' im Bereich von 10° ≤ α' ≤ 85° ein. Die Entformungsschräge 12' geht radial einwärts in eine kreisbogenförmige Senkung 22' des Ringkanalabschnitts 20' mit einem Radius R_{S}' in einem Bereich von 1/100 D_{M} ≤ R_{S}' ≤ 7/100 D_{M} über. Zudem steigt radial einwärts die kreisbogenförmige Senkung 22' über zumindest eine erste Stufe 36 kreisbogenförmig zum Matrizenboden 32 an. Aufgrund der gezielten Kombination des Ringkanalabschnitts 20' und des stufenweisen Anstiegs des Matrizenbodens bzw. des Anstiegs aus der Senkung 22' zum höchsten Punkt des Matrizenbodens 32' wird neben einem gleichförmigen Materialfluss zur Reduktion der Rissbildung eine stärkere laterale Aufspreizung des Nietfußes erzielt. Diese gesteigerte Aufspreizung erzielt einen größeren Hinterschnitt entgegen der Fügerichtung des gesetzten Stanzniets. Da die Verbindung der Bauteile nicht durch Rissbildung geschwächt ist und zudem der verstärkte Hinterschnitt die Lebensdauer der Verbindung und deren Festigkeit fördert, führt diese Stanznietgeometrie zu einer erhöhten Verbindungsqualität. Gemäß unterschiedlicher bevorzugter Ausführungsformen der bevorzugten Stanznietmatrize 1' weist der Matrizenboden 32' eine mittig angeordnete rotationssymmetrische Erhebung 40 auf. Diese ist vorzugsweise zur gezielten Aufspreizung des Stanzniets und zur Erhöhung des Hinterschnitts krummlinig oder kreisbogenförmig oder halbelliptisch oder zylindrisch ausgebildet.

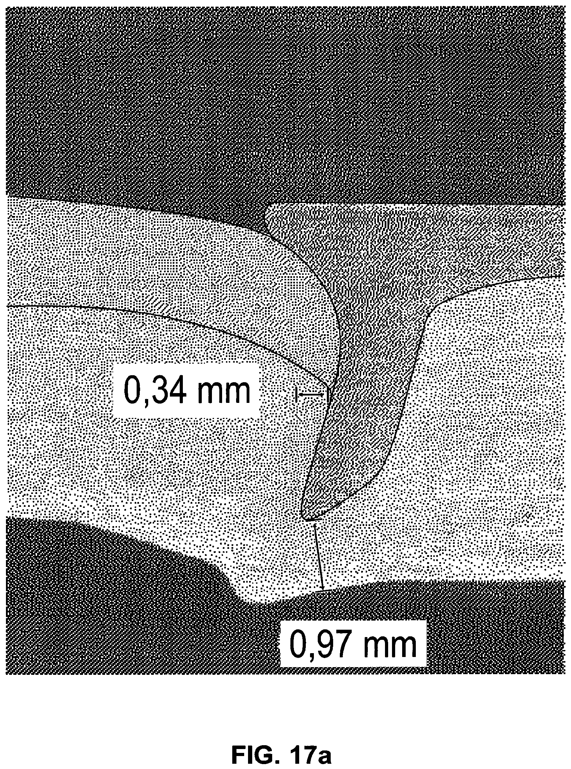

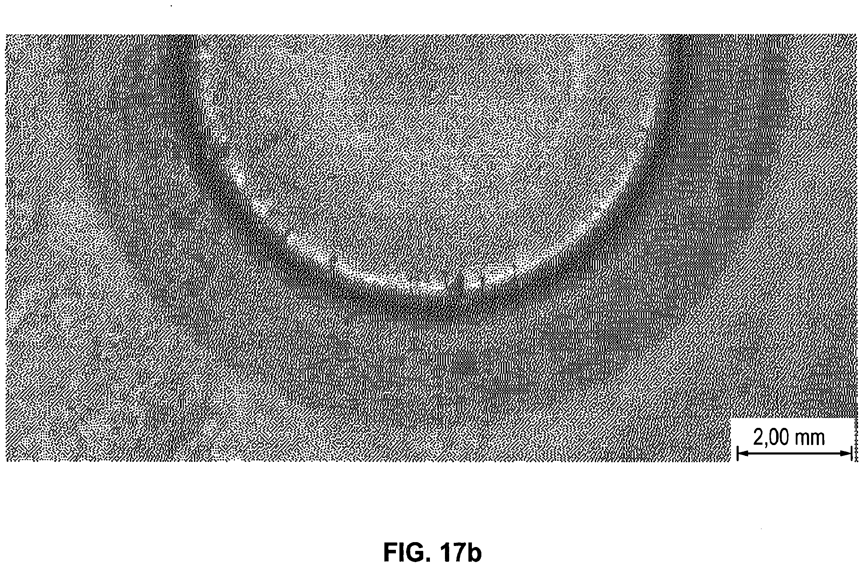

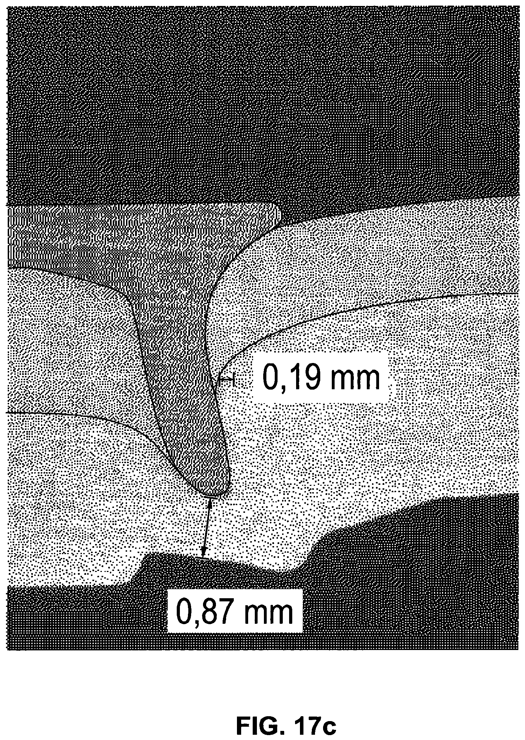

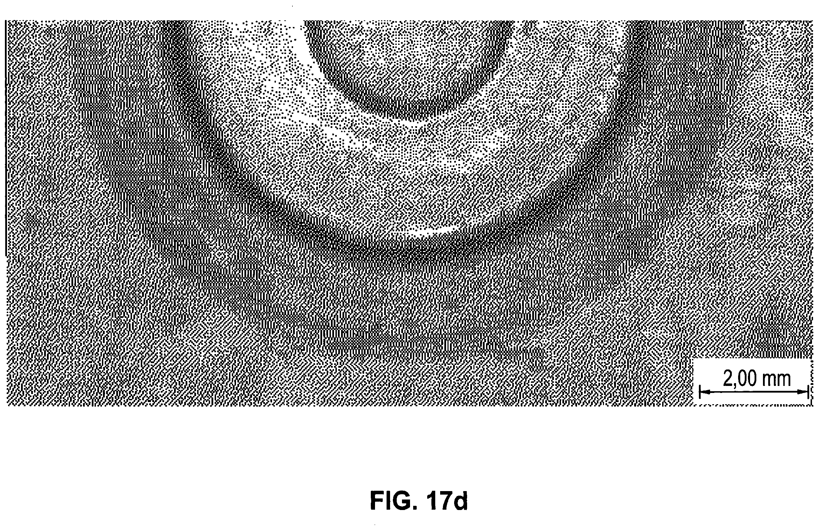

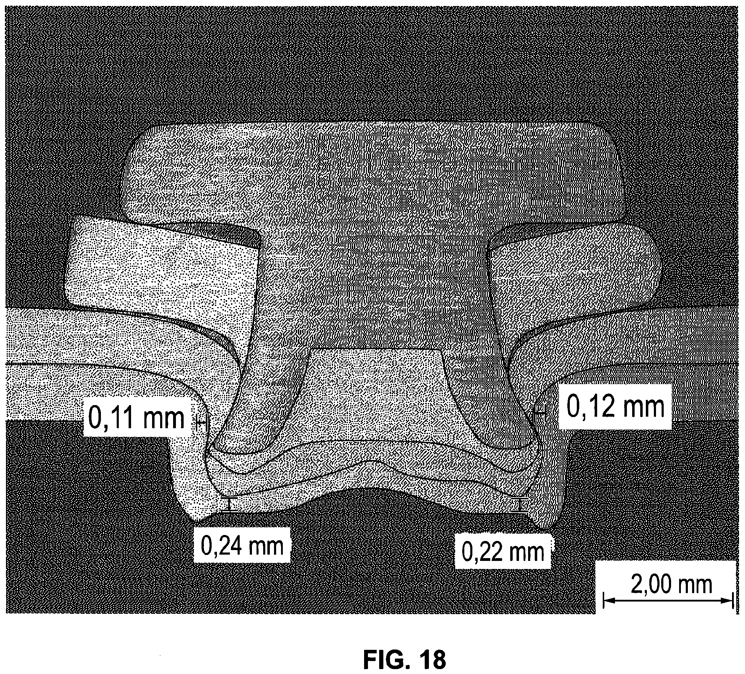

Figur 16 zeigt schematisch ein bekanntes Setzgerät in Kombination mit der erfindungsgemäßen Stanznietmatrize 1; 1'. Beispielgebend sind damit hergestellte Verbindungen mithilfe der Schliffbilder in Figur 17 gezeigt. Figur 17a zeigt eine Stanznietverbindung, die mit einer Stanznietmatrize 1 gemäß Figur 5 hergestellt worden ist. Figur 17b zeigt den Schließkopf dieser Verbindung. Figur 17c zeigt eine Stanznietverbindung, die mit einer Stanznietmatrize 1 mit zentraler Aussparung 34 hergestellt worden ist. Den Schließkopf der Verbindung zeigt Figur 17d. Figur 18 zeigt das Schliffbild einer Verbindung, die mit der Stanznietmatrize 1' gemäß Figur 15 hergestellt worden ist.

Beispielgebende erfindungsgemäß bevorzugte Matrizengeometrien sind im Folgenden anhand konkreter oben diskutierter Geometriedaten von Stanznietmatrizen beschrieben. Zur Einordnung der Matrizenform in Kombination mit den folgenden Geometriedaten wird auf die oben diskutierten Figuren Bezug genommen:

### Beispiel 1

Eine Matrizenform ähnlich Fig. 3 mit den folgenden Geometriedaten
D_{M}=12,2 mm
D₂₀=8,395 mm
α=18°
R_{OE}=0,5 mm
R_{ES}=10,4 mm
R_{S}=0,2 mm
R₂₄=11,17 mm
R₁₆=0,6 mm
T_{RK}=0,9 mm

### Beispiel 2

Eine Matrizenform ähnlich Fig. 3 mit den folgenden Geometriedaten
D_{M}=12,2 mm
D₂₀=7,3 mm
α=18°
R_{OE}=0,5 mm
R_{ES}=10,4 mm
R_{S}=0,8 mm
R₂₄=1,44 mm
R₁₆=0,6 mm
T_{RK}=1,3 mm

### Beispiel 3

Eine Matrizenform ähnlich Fig. 9 mit den folgenden Geometriedaten
D_{M}=12,2 mm
D₂₀=8,395 mm
α=18°
R_{OE}=0,5 mm
R_{ES}=10,4 mm
R_{S}=0,2 mm
R₂₄=11,17 mm
R₁₆=0,6 mm
T_{RK}=0,9 mm
D_{A}=3,6 mm
T_{A}=0,9 mm

### Beispiel 4

Eine Matrizenform ähnlich Fig. 9 mit den folgenden Geometriedaten
D_{M}=12,2 mm
D₂₀=8,09 mm
α=18°
R_{OE}=0,5 mm
R_{ES}=10,4 mm
R_{S}=0,44 mm
R₂₄=10 mm
R₁₆=0,6 mm
T_{RK}=1,05 mm
D_{A}=3,6 mm
T_{A}=0,5 mm

### Beispiel 5

Eine Matrizenform ähnlich Fig. 9 mit den folgenden Geometriedaten
D_{M}=12,2 mm
D₂₀=7,77 mm
α=18°
R_{OE}=0,5 mm
R_{ES}=10,4 mm
R_{S}=0,6 mm
R₂₄=3 mm
R₁₆=0,6 mm
T_{RK}=1,15 mm
D_{A}=3,7 mm
T_{A}=0,3 mm

### Beispiel 6

Eine Matrizenform ähnlich Fig. 9 mit den folgenden Geometriedaten
D_{M}=12,2 mm
D₂₀=7,28 mm
α=18°
R_{OE}=0,5 mm
R_{ES}=10,4 mm
R_{S}=0,S3 mm
R₂₄=1,44 mm
R₁₆=0,6 mm
T_{RK}=1,3 mm
D_{A}=3,6 mm
T_{A}=0,9 mm

### Beispiel 7

Eine Matrizenform ähnlich Fig. 9 mit den folgenden Geometriedaten
D_{M}=12,2 mm
D₂₀=7,57 mm
α=18°
R_{OE}=0,59 mm
R_{ES}=∞ → ausgeführt als geneigte Gerade
R_{S}=0,834 mm
R₂₄=11,17 mm
R₁₆=0,6 mm
T_{RK}=1,3 mm
D_{A}=3,5 mm
T_{A}=0,7 mm

### Beispiel 8

Eine Matrizenform ähnlich Fig. 10e) mit den folgenden Geometriedaten
D_{M}=12,2 mm
D₂₀=8,18 mm
α=18°
R_{OE}=0,59 mm
R_{ES}=∞ → ausgeführt als geneigte Gerade
R_{S}=0,7 mm
R₂₄=∞ → ausgeführt als geneigte Gerade
R₁₆=0,6 mm
T_{RK}=1,3 mm
D_{A}=4,87 mm an der Öffnungsseite der Aussparung 34
D_{A}=2,86 mm am Boden der Aussparung 34
T_{A}=0,47 mm

### Beispiel 9

Eine Matrizenform ähnlich Fig. 10e) mit den folgenden Geometriedaten
D_{M}=12,2 mm
D₂₀=7,53 mm
α=18°
R_{OE}=0,59 mm
R_{ES}=∞ → ausgeführt als geneigte Gerade
R_{S}=0,83 mm
R₂₄=∞ → ausgeführt als geneigte Gerade
R₁₆=0,6 mm
T_{RK}=1,3 mm
D_{A}=4,94 mm an der Öffnungsseite der Aussparung 34
D_{A}=2,86 mm am Boden der Aussparung 34
T_{A}=0,49 mm

### Bezugszeichenliste

- 1,1': Stanznietmatrize
- 3: Grundkörper
- 5: Matrizenfuß
- 7: Auskerbung
- 8: Oberseite
- 9,9': Vertiefung
- 10, 10': Entformungsabschnitt
- 12, 12': Entformungsschräge
- 14, 16: konvexe Stufen
- 20: Ringkanalabschnitt
- 22: Senkung
- 24: konvexe Stufe
- 30: Matrizenboden
- 32: ebene Fläche
- 34: Aussparung
- 36: Stufe

- F: Fügerichtung
- M: Mittelachse
- UP: Übergangspunkt
- T_{A}: Tiefe der Aussparung
- T_{RK}: Tiefe der Senkung
- D_{M}: Matrizendurchmesser
- α: Winkel der Entformungsschräge
- R_{ES}: Radius der Entformungsschräge
- R_{S}: Radius der Senkung

## Patentansprüche

1. Stanznietmatrize (1) für ein Setzgerät, mit der eine Stanznietverbindung in einer Mehrzahl von Bauteilen unter Ausbildung eines Schließkopfes herstellbar ist, die die folgenden Merkmale aufweist:
a. einen Grundkörper (3) mit einer Oberseite (8) und einer darin ausgebildeten rotationssymmetrisch zu einer Mittelachse (M) der Stanznietmatrize (1) angeordneten Vertiefung (9), die an der Oberseite (8) einen Durchmesser D_{M} aufweist,
b. die Vertiefung (9) umfasst einen radial außen angeordneten ringförmigen Entformungsabschnitt (10), einen sich daran anschließenden Ringkanalabschnitt (20) und einen mittig angeordneten Matrizenboden, **dadurch gekennzeichnet, dass**
c. in einem parallel zur Mittelachse (M) verlaufenden Querschnitt der Stanznietmatrize (1)
c1. eine Entformungsschräge (12) des Entformungsabschnitts (10) mit der Oberseite (8) der Stanznietmatrize (1) einen Winkel α im Bereich von 5° ≤ α ≤ 45° einschließt,
c2. die Entformungsschräge (12) radial einwärts über eine Stufe (16) in eine kreisbogenförmige Senkung (22) des Ringkanalabschnitts (20) mit einem Radius Rs in einem Bereich von 8,2/1000 D_{M} ≤ R_{S} ≤ 8,2/100 D_{M} übergeht und
c3. radial einwärts die kreisbogenförmige Senkung (22) geradlinig oder kreisbogenförmig oder krummlinig zum Matrizenboden (30) ansteigt.

2. Stanznietmatrize (1) gemäß Patentanspruch 1, deren Entformungsschräge (12) geradlinig oder konkav-kreisbogenförmig mit einem Radius R_{ES} im Bereich von 7/10 D_{M} ≤ R_{ES} ≤ 9/10 D_{M} ausgebildet ist.

3. Stanznietmatrize (1) gemäß Patentanspruch 1 oder 2, in der die kreisbogenförmige Senkung (22) eine maximale Tiefe T_{RK} bezogen auf die Oberseite (8) im Bereich von 6/100 D_{M} ≤ T_{RK} ≤ 12/100 D_{M} aufweist.

4. Stanznietmatrize (1) gemäß einem der vorhergehenden Patentansprüche, in der die Entformungsschräge (12) in einer konvexen Stufe (16) in die Senkung (22) des Ringkanalabschnitts (20) übergeht.

5. Stanznietmatrize (1) gemäß einem der vorhergehenden Patentansprüche, in der die Senkung (22) des Ringkanalabschnitts (20) in einer konvexen Stufe in den Matrizenboden (30) übergeht.

6. Stanznietmatrize (1) gemäß Patentanspruch 5 in Kombination mit Patentanspruch 4, in der die kreisbogenförmige Senkung (22) in zwei benachbarten Übergangspunkten tangential in die benachbarten konvexen Stufen übergeht und ein radialer Abstand A_{UP} zwischen den benachbarten Übergangspunkten (UP) eine Breite der kreisbogenförmigen Senkung (22) des Ringkanalabschnitts (20) definiert.

7. Stanznietmatrize (1) gemäß Patentanspruch 6, in der die Breite der kreisbogenförmigen Senkung (22) im Bereich 3/100 D_{M} ≤ A_{UP} ≤ 20/100 D_{M} liegt.

8. Stanznietmatrize (1) gemäß einem der vorhergehenden Patentansprüche, die weiterhin eine mittige Aussparung im Matrizenboden aufweist mit einer Tiefe T_{A} im Bereich von 2/100 D_{M} ≤ T_{A} ≤ 8/100 D_{M} und mit einem bevorzugten Durchmesser D_{A} im Bereich von 15/100 D_{M} ≤ D_{A} ≤ 35/100 D_{M}, insbesondere auf Höhe des Matrizenbodens.

9. Stanznietmatrize (1) gemäß Patentanspruch 8, deren Vertiefung (8) zylindrisch ausgebildet ist oder sich in Richtung maximaler Tiefe T_{A} konisch verjüngt.

10. Stanznietmatrize (1') für ein Setzgerät, mit der eine Stanznietverbindung in einer Mehrzahl von Bauteilen unter Ausbildung eines Schließkopfes herstellbar ist, die die folgenden Merkmale aufweist:
a. einen Grundkörper (3) mit einer Oberseite (8) und einer darin ausgebildeten rotationssymmetrisch zu einer Mittelachse M der Stanznietmatrize (1') angeordneten Vertiefung (9'), die an der Oberseite (8) einen Durchmesser D_{M} aufweist,
b. die Vertiefung (9') umfasst einen radial außen angeordneten ringförmigen Entformungsabschnitt (10'), einen sich daran anschließenden Ringkanalabschnitt (20') und einen mittig angeordneten Matrizenboden (30'), wobei
c. in einem parallel zur Mittelachse M verlaufenden Querschnitt der Stanznietmatrize (1')
c1. eine Entformungsschräge (12') des Entformungsabschnitts (10') mit der Oberseite (8) der Stanznietmatrize (1') einen Winkel α' im Bereich von 10° ≤ α' ≤ 85° einschließt,
c2. die Entformungsschräge (12') radial einwärts in eine kreisbogenförmige Senkung (22') des Ringkanalabschnitts (20') mit einem Radius R's in einem Bereich von 1/100 D_{M} ≤ R's ≤ 7/100 D_{M} übergeht und
c3. radial einwärts die kreisbogenförmige Senkung (22') über zumindest eine erste Stufe (24') kreisbogenförmig zum Matrizenboden ansteigt, **dadurch gekennzeichnet, dass**
c4. der Matrizenboden (30') eine mittig angeordnete rotationssymmetrische Erhebung (40') aufweist, die krummlinig, kreisbogenförmig, halbelliptisch oder zylindrisch ausgebildet ist, und
c5. zwischen der ersten Stufe (24') und der rotationssymmetrischen Erhebung (40') eine ebene Fläche (32') bereitgestellt ist.

11. Setzgerät mit einer Stanznietmatrize (1; 1') gemäß einem der Ansprüche 1 bis 10.

12. Verbindung aus zumindest einem ersten Bauteil und einem zweiten Bauteil mithilfe eines Stanzniets und einer Stanznietmatrize (1; 1') gemäß einem der Patentansprüche 1 bis 10, so dass ein die Verbindung charakterisierender Schließkopf komplementäre Formmerkmale in Bezug auf die Stanznietmatrize (1, 1') aufweist.

13. Verbindung gemäß Patentanspruch 12, in der das zum Schließkopf benachbarte zweite Bauteil aus einem zugspannungsempfindlichen oder spröden Material besteht, vorzugsweise 7000er AluminiumLegierungen.

14. Stanznietverfahren zur Herstellung einer Verbindung in zumindest einem ersten und einem zweiten Bauteil mithilfe eines Stanzniets, einem Setzgerät und einer Stanznietmatrize (1; 1') gemäß einem der Patentansprüche 1 bis 10, das die folgenden Schritte aufweist:
a. Bereitstellen (S1) der Stanznietmatrize (1; 1') unterhalb eines Stempels des Setzgeräts,
b. Anordnen (S2) des ersten und des zweiten Bauteils zwischen der Stanznietmatrize (1; 1') und dem Stempel und
c. Setzen (S3) eines Stanzniets in das erste und das zweite Bauteil bei gleichzeitiger Ausbildung eines Schließkopfes, der komplementär zu einer Innenkontur der Stanznietmatrize (1; 1') ausgebildete Formmerkmale aufweist.

## Claims

1. Self-piercing riveting die (1) for a setting device, by means of which a self-piercing riveting connection in a plurality of components is establishable by forming a closing head, comprising the following features:
a. a main body (3) with an upper side (8) and a recess (9) formed therein and being arranged rotationally symmetrically to a central axis (M) of the self-piercing riveting die (1), the recess (9) having a diameter D_{M} at the upper side (8),
b. the recess (9) comprises an annular demolding section (10) arranged radially outwardly, an annular channel section (20) subsequent thereto and a centrally arranged die bottom, **characterized in that**
c. in a cross section of the self-piercing riveting die (1) extending parallel to the central axis (M)
c1. a demolding inclination (12) of the demolding section (10) encloses with the upper side (8) of the self-piercing riveting die (1) an angle α in the range of 5° ≤ α ≤ 45°,
c2. the demolding inclination (12) transitions radially inwardly via a step (16) into a circular arc-shaped lowering (22) of the annular channel section (20) with a radius R_{S} in a range of 8.2/1000 D_{M} ≤ R_{S} ≤ 8.2/100 D_{M}, and
c3. radially inwardly the circular arc-shaped lowering (22) rises straight-lined or circular arc-shaped or curvilinearally to the die bottom (30).

2. Self-piercing riveting die (1) according to claim 1, the demolding inclination (12) of which is formed straight-lined or concave-curvilinearally with a radius R_{ES} in the range of 7/10 D_{M} ≤ R_{ES} ≤ 9/10 D_{M}.

3. Self-piercing riveting die (1) according to claim 1 or 2, in which the circular arc-shaped lowering (22) has a maximal depth T_{RK} in the range of 6/100 D_{M} ≤ T_{RK} ≤ 12/100 D_{M} with respect to the upper side (8).

4. Self-piercing riveting die (1) according to one of the preceding claims, in which the demolding inclination (12) transitions in a convex step (16) into the lowering (22) of the annular channel section (20).

5. Self-piercing riveting die (1) according to one of the preceding claims, in which the lowering (22) of the annular channel section (20) transitions in a convex step into the die bottom (30).

6. Self-piercing riveting die (1) according to claim 5 in combination with claim 4, in which the circular arc-shaped lowering (22) transitions in two adjacent transition points tangentially into the adjacent convex steps and a radial distance A_{UP} between the adjacent transition points (UP) defines a width of the circular arc-shaped lowering (22) of the annular channel section (20).

7. Self-piercing riveting die (1) according to claim 6, in which the width of the circular arc-shaped lowering (22) is preferably in the range of 3/100 D_{M} ≤ A_{UP} ≤ 20/100 D_{M}.

8. Self-piercing riveting die (1) according to one of the preceding claims, further having a centered recess in the die bottom with a depth T_{A} in the range of 2/100 D_{M} ≤ T_{A} ≤ 8/100 D_{M} and with a preferred diameter D_{A} in the range of 15/100 D_{M} ≤ D_{A} ≤ 35/100 D_{M}, especially at the level of the die bottom.

9. Self-piercing riveting die (1) according to claim 8, the recess (8) of which is cylindrically formed or conically tapered in the direction of the maximal depth T_{A}.

10. Self-piercing riveting die (1') for a setting device, with which a self-piercing riveting connection in a plurality of components is establishable by forming a closing head, comprising the following features:
a. a main body (3) with an upper side (8) and a recess (9') arranged rotationally symmetrically to the central axis (M) of the self-piercing riveting die (1') formed therein, the recess (9') having a diameter D_{M} at the upper side (8),
b. the recess (9') comprises an annular demolding section (10') arranged radially outwardly, a subsequent or adjacent annular channel section (20') and a centrally arranged die bottom (30'), wherein
c. in a cross section of the self-piercing riveting die (1') extending parallel to the central axis M
c1. a demolding inclination (12') of the demolding section (10') encloses with the upper side (8) of the self-piercing riveting die (1') an angle α' in the range of 10° ≤ α' ≤ 85°,
c2. the demolding inclination (12') transitioning radially inwardly into a circular arc-shaped lowering (22') of the annular channel section (20') with a radius R's in a range of 1/100 D_{M} ≤ R'_{S} ≤ 7/100 D_{M}, and
c3. the circular arc-shaped lowering (22') radially inwardly rising via an at least first step (24') circular arc-shaped to the die bottom, **characterized in that**
c4. the die bottom (30') comprises a centrally arranged, rotationally symmetric rise (40') formed curvilinearally, circularly, semi-elliptically or cylindrically, and
c5. a plane surface (32') is provided between the first step (24') and the rotationally symmetric rise (40').

11. A setting device with a self-piercing riveting die (1; 1') according to one of the claims 1 to 10.

12. A connection between an at least first component and a second component by means of a self-piercing rivet and a self-piercing riveting die (1; 1') according to one of the claims 1 to 10, so that a closing head which is characteristic for the connection has complementary shape features with regard to the self-piercing riveting die (1, 1').

13. Connection according to claim 12, in which the second component adjacent to the closing head consists of a tension-sensitive or brittle material, preferably aluminum alloys from the 7000 series.

14. Self-piercing riveting method for establishing a connection in at least a first and a second component by means of a self-piercing rivet, a setting device and a self-piercing riveting die (1; 1') according to one of the claims 1 to 10, comprising the following steps:
a. providing (S1) the self-piercing riveting die (1; 1') below the punch of the setting device,
b. arranging (S2) the first and the second component between the self-piercing riveting die (1; 1') and the punch and
c. setting (S3) a self-piercing rivet into the first and the second component while simultaneously forming a closing head, which shows shape features complementary to the inner contour of the self-piercing riveting die (1; 1').

## Revendications

1. Matrice pour rivet auto-poinçonneur (1) pour un outil d'enfoncement, permettant de réaliser un assemblage par rivet auto-poinçonneur dans une pluralité de composants avec formation d'une tête de fermeture, présentant les caractéristiques suivantes :
a. un corps de base (3) avec une face supérieure (8) et un renfoncement (9) formé dans celui-ci, disposé de manière symétrique en rotation par rapport à un axe médian (M) de la matrice pour rivet auto-poinçonneur (1) et présentant un diamètre D_{M} au niveau de la face supérieure (8),
b. le renfoncement (9) comporte une section de démoulage (10) annulaire disposée radialement à l'extérieur, une section de canal annulaire (20) prolongeant celle-ci et un fond de matrice disposé au centre, **caractérisée en ce que**
c. dans une section transversale de la matrice pour rivet auto-poinçonneur (1) s'étendant parallèlement à l'axe médian (M),
c1. un chanfrein de démoulage (12) de la section de démoulage (10) forme un angle α dans la plage de 5° ≤ α ≤ 45° avec la face supérieure (8) de la matrice pour rivet auto-poinçonneur (1),
c2. le chanfrein de démoulage (12) se prolonge radialement vers l'intérieur par le biais d'un gradin (16) en un affaissement en forme d'arc de cercle (22) de la section de canal annulaire (20) avec un rayon R_{S} dans une plage de 8,2/1000 D_{M} ≤ R_{S} ≤ 8,2/100 D_{M}, et
c3. l'affaissement en forme d'arc de cercle (22) croît radialement vers l'intérieur de façon rectiligne ou en arc de cercle ou de façon curviligne par rapport au fond de matrice (30).

2. Matrice pour rivet auto-poinçonneur (1) selon la revendication 1, dont le chanfrein de démoulage (12) est formé de façon rectiligne ou en forme d'arc de cercle concave avec un rayon R_{ES} dans la plage de 7/10 D_{M} ≤ R_{ES} ≤ 9/10 D_{M}.

3. Matrice pour rivet auto-poinçonneur (1) selon la revendication 1 ou 2, dans laquelle l'affaissement en forme d'arc de cercle (22) présente une profondeur maximale T_{RK} par rapport à la face supérieure (8) dans la plage de 6/100 D_{M} ≤ T_{RK} ≤ 12/100 D_{M}.

4. Matrice pour rivet auto-poinçonneur (1) selon l'une des revendications précédentes, dans laquelle le chanfrein de démoulage (12) se prolonge par un gradin convexe (16) dans l'affaissement (22) de la section de canal annulaire (20).

5. Matrice pour rivet auto-poinçonneur (1) selon l'une des revendications précédentes, dans laquelle l'affaissement (22) de la section de canal annulaire (20) se prolonge par un gradin convexe dans le fond de matrice (30).

6. Matrice pour rivet auto-poinçonneur (1) selon la revendication 5 en combinaison avec la revendication 4, dans laquelle l'affaissement en forme d'arc de cercle (22) se prolonge par deux points de transition voisins tangentiellement dans les gradins convexes voisins et un espacement radial A_{UP} entre les points de transition voisins (UP) définit une largeur de l'affaissement en forme d'arc de cercle (22) de la section de canal annulaire (20).

7. Matrice pour rivet auto-poinçonneur (1) selon la revendication 6, dans laquelle la largeur de l'affaissement en forme d'arc de cercle (22) est comprise dans la plage de 3/100 D_{M} ≤ A_{UP} ≤ 20/100 D_{M}.

8. Matrice pour rivet auto-poinçonneur (1) selon l'une des revendications précédentes, présentant en outre un évidement central dans le fond de matrice, avec une profondeur T_{A} dans la plage de 2/100 D_{M} ≤ T_{A} ≤ 8/100 D_{M} et avec un diamètre préféré D_{A} dans la plage de 15/100 D_{M} ≤ D_{A} ≤ 35/100 D_{M}, en particulier à la hauteur du fond de matrice.

9. Matrice pour rivet auto-poinçonneur (1) selon la revendication 8, dont le renfoncement (8) est formé de façon cylindrique ou s'amincit de façon conique en direction de la profondeur maximale T_{A}.

10. Matrice pour rivet auto-poinçonneur (1') pour un outil d'enfoncement, permettant de réaliser un assemblage par rivet auto-poinçonneur dans une pluralité de composants avec formation d'une tête de fermeture, présentant les caractéristiques suivantes :
a. un corps de base (3) avec une face supérieure (8) et un renfoncement (9') formé dans celui-ci, disposé de manière symétrique en rotation par rapport à un axe médian (M) de la matrice pour rivet auto-poinçonneur (1') et présentant un diamètre D_{M} au niveau de la face supérieure (8),
b. le renfoncement (9') comporte une section de démoulage (10') annulaire disposée radialement à l'extérieur, une section de canal annulaire (20') prolongeant celle-ci et un fond de matrice (30') disposé au centre, dans laquelle
c. dans une section transversale de la matrice pour rivet auto-poinçonneur (1') s'étendant parallèlement à l'axe médian M,
c1. un chanfrein de démoulage (12') de la section de démoulage (10') forme un angle α' dans la plage de 10° ≤ α' ≤ 85° avec la face supérieure (8) de la matrice pour rivet auto-poinçonneur (1'),
c2. le chanfrein de démoulage (12') se prolonge radialement vers l'intérieur en un affaissement en forme d'arc de cercle (22') de la section de canal annulaire (20') avec un rayon R'_{S} dans une plage de 1/100 D_{M} ≤ R'_{S} ≤ 7/100 D_{M}, et
c3. l'affaissement en forme d'arc de cercle (22') croît radialement vers l'intérieur en arc de cercle par rapport au fond de matrice par le biais d'au moins un premier gradin (24'), **caractérisée en ce que**
c4. le fond de matrice (30') présente une surélévation symétrique en rotation (40') disposée de façon centrale, laquelle est formée de façon curviligne, en forme d'arc de cercle, de façon semi-elliptique ou cylindrique, et
c5. une surface plane est agencée entre le premier gradin (24') et la surélévation symétrique en rotation (40').

11. Outil d'enfoncement comprenant une matrice pour rivet auto-poinçonneur (1 ; 1') selon l'une des revendications 1 à 10.

12. Assemblage constitué d'au moins un premier composant et un deuxième composant à l'aide d'un rivet auto-poinçonneur et d'une matrice pour rivet auto-poinçonneur (1 ; 1') selon l'une des revendications 1 à 10, de telle façon qu'une tête de fermeture caractérisant l'assemblage présente des éléments de forme complémentaires quant à la matrice pour rivet auto-poinçonneur (1 ; 1').

13. Assemblage selon la revendication 12, dans lequel le deuxième composant adjacent à la tête de fermeture est constitué d'un matériau sensible aux contraintes de traction ou cassant, de préférence d'un alliage d'aluminium de la série 7000.

14. Procédé de pose de rivet auto-poinçonneur pour la réalisation d'un assemblage dans au moins un premier et un deuxième composant à l'aide d'un rivet auto-poinçonneur, d'un outil d'enfoncement et d'une matrice pour rivet auto-poinçonneur (1 ; 1') selon l'une des revendications 1 à 10, présentant les étapes suivantes :
a. mise à disposition (S1) de la matrice pour rivet auto-poinçonneur (1; 1') sous un tampon de l'outil d'enfoncement,
b. agencement (S2) du premier et du deuxième composant entre la matrice pour rivet auto-poinçonneur (1 ; 1') et le tampon, et
c. enfoncement (S3) d'un rivet auto-poinçonneur dans le premier et le deuxième composant avec réalisation simultanée d'une tête de fermeture présentant des éléments de forme complémentaires à un contour intérieur de la matrice pour rivet auto-poinçonneur (1 ; 1').
